# EUROPEAN PATENT APPLICATION

(11) **EP 4 467 854 A1**
(43) Date of publication of application: **27.11.2024**
(21) Application number: 22922040.5
(22) Date of filing: 02.11.2022
(51) Int. Cl.: F16K 11/087, F16K 27/06

(54) **ASSEMBLY METHOD FOR FLOW PATH SWITCHING VALVE**

(30) Priority: 20.01.2022 JP 2022007408
(71) Applicant: Fujikoki Corporation, Tokyo 158-0082 (JP)
(72) Inventor: KONDO, Daisuke, Tokyo 158-0082 (JP); MOCHIZUKI, Kenichi, Tokyo 158-0082 (JP)
(74) Representative: Ter Meer Steinmeister & Partner
(86) International application number: PCT/JP2022/041082
(87) International publication number: WO 2023/139889

(57) **Abstract**

When a valve body is inclined by 90 [degrees] with respect to a use state so that a lower surface portion of the valve body faces a side wall of a valve main body, a gap into which a sealing portion can be inserted is formed between the side wall and the lower surface portion. The sealing portion is inserted into the gap. Then, the valve body is sequentially caused to face the other side walls.

## Description

### Technical Field

The present disclosure relates to a method of assembling a flow path switching valve.

### Background Art

A switching valve described in Japanese Patent Application Laid-Open (JP-A) No. 2016-138626 includes a valve case having a valve chamber and having a plurality of opening holes communicating with the outside from the valve chamber, a ball-shaped valve body having a flow path selectively communicating with the opening hole and accommodated in the valve chamber, a plurality of valve covers having an outflow/inflow port communicating with the opening hole and attached to the valve case, a drive source for rotationally driving the valve body, a valve shaft, a sliding material disposed between the valve body and the valve cover and in sliding contact with the valve body when the valve body is rotationally driven and making the plurality of opening holes non-communicating with each other, and an elastic member for pressing the sliding material against the valve body.

### SUMMARY OF INVENTION

### Technical Problem

A flow path switching valve includes a valve main body in which a valve chamber is formed, a spherical valve body disposed in the valve chamber, and an annular sealing portion disposed in the valve chamber. Specifically, a flow path port through which a fluid passes is formed in each of the plurality of side walls constituting the valve main body. The annular sealing portion is disposed so as to surround the flow path port. The annular sealing portion is in contact with an outer surface of the valve body to seal between the outer surface of the valve body and the side wall of the valve main body.

Conventionally, in a state in which the valve body is disposed in the valve chamber, an operator cannot dispose the sealing portion in the valve chamber. In a state in which all the sealing portions are disposed in the valve chamber, the operator cannot dispose the valve body in the valve chamber. Therefore, the valve main body has been divided. For example, three side walls in which the flow path ports are formed are divided into one portion including one side wall and the other portion including two side walls. Then, in a state in which the valve body and all the sealing portions were disposed in the valve chamber, one portion and the other portion divided in the valve main body were fused.

In such a configuration, a relative positional variation occurs between one portion and the other portion in the valve main body, so that a distance between the flow path port formed in the side wall of the valve main body and the outer surface of the valve body also varies.

Therefore, it is desirable to dispose the valve body and the sealing portion in the valve chamber of the valve main body in which the side wall in which the flow path port is formed is not divided. However, for such a configuration, a unit in which the sealing portion and the valve body are combined in advance needs to be disposed in the valve chamber. Therefore, the work is difficult.

An object of the disclosure is to provide a method of assembling a flow path switching valve capable of easily disposing a valve body and a sealing portion in a valve chamber of a valve main body in which a side wall in which a flow path port is formed is not divided. Solution to Problem

According to a first aspect of the disclosure, there is provided a method of assembling a flow path switching valve including a valve main body, a valve chamber having one end opened being formed inside the valve main body, and a flow path port through which a fluid passes being formed in each of three side walls of the valve chamber, a valve body that is rotatably disposed in the valve chamber, that has a cavity formed inside the valve body, that has a spherical outer surface, that has a flat portion formed in a portion facing a bottom portion of the valve chamber, and that has a flow hole through which a fluid flowing into the cavity or flowing out from the cavity passes and which is formed in the outer surface, three sealing portions that each have an annular shape, that are each disposed so as to surround the flow path port, and that each come into contact with the outer surface to seal between the outer surface and a side wall, a cover that closes an opening port of the valve chamber, and a gap formed between the flat portion of the valve body and the side wall of the valve main body so that the sealing portion is inserted in a state in which the flat portion faces the side wall, the method including: a step of disposing a first sealing portion so as to surround a first flow path port through the opening port; a step of disposing the valve body so that the side wall on which the first flow path port is formed and the flat portion face each other through the opening port; a step of rotating the valve body so that the flat portion and the side wall on which a second flow path port is formed face each other; a step of disposing a second sealing portion so as to surround the second flow path port through the opening port; a step of rotating the valve body so that the flat portion and the side wall on which a third flow path port is formed face each other; a step of disposing a third sealing portion so as to surround the third flow path port through the opening port; a step of rotating the valve body so that the flat portion and the bottom portion face each other; and a step of closing the opening port by using the cover.

According to the above aspect, in the valve main body of the flow path switching valve assembled by the method of assembling the flow path switching valve, the triangular prism-shaped valve chamber with one end opened is formed inside. The flow path port through which the fluid from the valve chamber passes is formed in each of the three side walls constituting the valve chamber.

By causing the flat portion of the valve body to face the side wall of the valve main body, the gap into which the sealing portion is inserted is formed between the flat portion and the side wall. Accordingly, by rotating the valve body to cause the flat portion of the valve body to sequentially face the three side walls, the sealing portion is inserted into the valve chamber and disposed around each of the three flow path ports. The flat portion of the valve body and the bottom portion constituting the valve chamber are made to face each other by rotating the valve body in a state in which the sealing portions are disposed.

As described above, the valve body and the sealing portion can be easily disposed in the valve chamber of the valve main body in which the side wall in which the flow path port is formed is not divided.

According to a second aspect of the disclosure, there is provided a method of assembling a flow path switching valve including a valve main body, a valve chamber having one end opened being formed inside the valve main body, an inflow port through which a fluid passes being formed in a bottom portion of the valve chamber, and a flow path port through which the fluid passes being formed in each of three side walls of the valve chamber, a valve body that is rotatably disposed in the valve chamber, that has a cavity formed inside the valve body, that has a spherical outer surface, that has a flat portion formed in a portion facing the bottom portion, and that has a flow hole through which a fluid flowing into the cavity or flowing out from the cavity passes and which is formed in the outer surface, three sealing portions that each have an annular shape, that are each disposed so as to surround the flow path port, and that each come into contact with the outer surface to seal between the outer surface and a side wall, a cover that closes an opening port of the valve chamber, and a gap formed between the flat portion of the valve body and the side wall of the valve main body so that the sealing portion is inserted in a state in which the flat portion faces the side wall, the method including: a step of disposing a first sealing portion so as to surround a first flow path port through the opening port; a step of disposing the valve body so that the side wall on which the first flow path port is formed and the flat portion face each other through the opening port; a step of rotating the valve body so that the flat portion and the side wall on which a second flow path port is formed face each other; a step of disposing a second sealing portion so as to surround the second flow path port through the opening port; a step of rotating the valve body so that the flat portion and the side wall on which a third flow path port is formed face each other; a step of disposing a third sealing portion so as to surround the third flow path port through the opening port; a step of rotating the valve body so that the flat portion and the bottom portion face each other; and a step of closing the opening port by using the cover.

According to the above aspect, in the valve main body of the flow path switching valve assembled by the method of assembling the flow path switching valve, a triangular prism-shaped valve chamber having one end opened is formed inside. The flow path port through which the fluid from the valve chamber passes is formed in each of the three side walls constituting the valve chamber.

By causing the flat portion of the valve body to face the side wall of the valve main body, the gap into which the sealing portion is inserted is formed between the flat portion and the side wall. Accordingly, by rotating the valve body to cause the flat portion of the valve body to sequentially face the three side walls, the sealing portion is inserted into the valve chamber and disposed around each of the three flow path ports. The flat portion of the valve body and the bottom portion constituting the valve chamber are made to face each other by rotating the valve body in a state in which the sealing portions are disposed.

As described above, the valve body and the sealing portion can be easily disposed in the valve chamber of the valve main body in which the side wall in which the flow path port is formed is not divided.

In the method of assembling a flow path switching valve according to a third aspect of the disclosure, in the method of assembling a flow path switching valve according to the first or second aspect, a step of rotating the valve body to cause the flow hole of the valve body and any one of the flow path ports to face each other is provided between the step of disposing the third sealing portion so as to surround the third flow path port through the opening port and the step of rotating the valve body so that the flat portion and the bottom portion face each other, and in the step of rotating the valve body so that the flat portion and the bottom portion face each other, a rod-shaped jig is inserted into the valve chamber from the flow path port, a distal end of the jig engages with the valve body through the flow path port, and the valve body is rotated by rotating the jig.

According to the above aspect, the valve body is rotated to cause the flow hole of the valve body and any one of the flow path ports to face each other. Then, the rod-shaped jig is inserted into the valve chamber from the flow path port, the distal end of the jig is engaged with the valve body, and the valve body is rotated by rotating the jig.

As described above, by using the rod-shaped jig, the valve body can be easily rotated even in a state in which the valve body and the three sealing portions are disposed in the valve chamber.

In the method of assembling a flow path switching valve according to a fourth aspect of the disclosure, in the method of assembling the flow path switching valve according to any one of the first to third aspects, after the step of disposing the first sealing portion so as to surround the first flow path port, the step of disposing the valve body so that the side wall on which the first flow path port is formed and the flat portion face each other is performed.

According to the above aspect, after the step of disposing the first sealing portion so as to surround the first flow path port, the valve body is disposed so that the side wall on which the first flow path port is formed and the flat portion face each other. As a result, the valve body can be disposed without being conscious of forming the gap into which the sealing portion is inserted between the side wall on which the first flow path port is formed and the flat portion, that is, without causing a burden in the step of forming the gap.

### Advantageous Effects of Invention

According to the disclosure, a valve body and a sealing portion can be easily disposed in a valve chamber of a valve main body in which a side wall in which a flow path port is formed is not divided.

### BRIEF DESCRIPTION OF DRAWINGS

Fig. 1 is an exploded perspective view illustrating a flow path switching valve used in a method of assembling a flow path switching valve according to an embodiment of the disclosure.
Fig. 2A is a perspective view illustrating a valve main body of the flow path switching valve used in the method of assembling the flow path switching valve according to the embodiment of the disclosure, Fig. 2B is a cross-sectional perspective view illustrating the valve main body of the flow path switching valve according to the embodiment of the disclosure, and Fig. 2C is a plan cross-sectional view illustrating the valve main body of the flow path switching valve according to the embodiment of the disclosure.
Fig. 3 is a view illustrating a valve body of the flow path switching valve used in the method of assembling the flow path switching valve according to the embodiment of the disclosure.
Figs. 4A and 4B are perspective views illustrating a sealing portion of the flow path switching valve used in the method of assembling the flow path switching valve according to the embodiment of the disclosure, and Fig. 4C is a cross-sectional view illustrating the sealing portion of the flow path switching valve according to the embodiment of the disclosure.
Figs. 5A and 5B are cross-sectional views illustrating the valve main body, the sealing portion, and the valve body of the flow path switching valve used in the method of assembling the flow path switching valve according to the embodiment of the disclosure.
Fig. 6 is a cross-sectional view illustrating the valve main body, the sealing portion, and the valve body of the flow path switching valve used in the method of assembling the flow path switching valve according to the embodiment of the disclosure.
Fig. 7A is a cross-sectional view illustrating a cover and a drive unit of the flow path switching valve used in the method of assembling the flow path switching valve according to the embodiment of the disclosure, and Fig. 7B is an enlarged cross-sectional view illustrating the cover and the drive unit of the flow path switching valve according to the embodiment of the disclosure.
Fig. 8A is a plan view illustrating the method of assembling the flow path switching valve according to the embodiment of the disclosure in the middle of assembly, and Fig. 8B is a perspective view illustrating the flow path switching valve in the middle of assembly.
Fig. 9A is a plan view illustrating the method of assembling the flow path switching valve according to the embodiment of the disclosure in the middle of assembly, and Fig. 9B is a perspective view illustrating the flow path switching valve in the middle of assembly.
Fig. 10A is a plan view illustrating the method of assembling the flow path switching valve according to the embodiment of the disclosure in the middle of assembly, and Fig. 10B is a perspective view illustrating the method in the middle of assembly.
Fig. 11A is a plan view illustrating the method of assembling the flow path switching valve according to the embodiment of the disclosure in the middle of assembly, and Fig. 11B is a perspective view illustrating the method in the middle of assembly.
Fig. 12A is a plan view illustrating the method of assembling the flow path switching valve according to the embodiment of the disclosure in the middle of assembly, and Fig. 12B is a perspective view illustrating the method in the middle of assembly.
Fig. 13A is a plan view illustrating the method of assembling the flow path switching valve according to the embodiment of the disclosure in the middle of assembly, and Fig. 13B is a perspective view illustrating the method in the middle of assembly.
Fig. 14A is a plan view illustrating the method of assembling the flow path switching valve according to the embodiment of the disclosure in the middle of assembly, and Fig. 14B is a perspective view illustrating the method in the middle of assembly.
Fig. 15A is a plan view illustrating the method of assembling the flow path switching valve according to the embodiment of the disclosure in the middle of assembly, and Fig. 15B is a perspective view illustrating the method in the middle of assembly.
Fig. 16 is a perspective view illustrating the method of assembling the flow path switching valve according to the embodiment of the disclosure, and illustrating the flow path switching valve in the middle of assembly.
Fig. 17 is a perspective view illustrating the whole of the flow path switching valve assembled by the method of assembling the flow path switching valve according to the embodiment of the disclosure.

### DESCRIPTION OF EMBODIMENTS

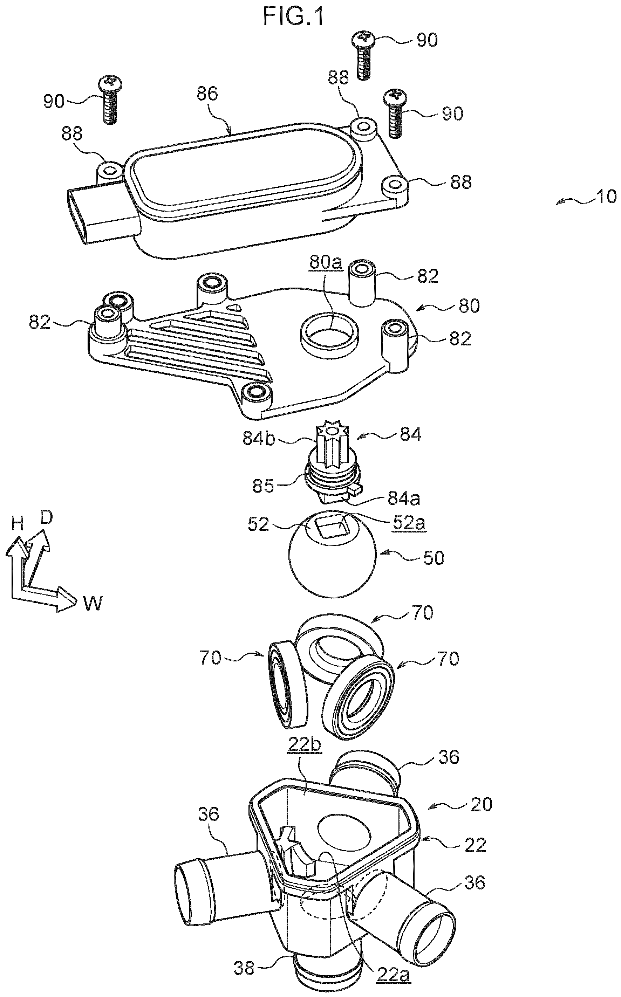

An example of a method of assembling a flow path switching valve according to an embodiment of the disclosure will be described with reference to Figs. 1 to 17. An arrow H in each drawing indicates a component vertical direction, an arrow W indicates a component width direction, and an arrow D indicates a component depth direction. The component vertical direction, the component width direction, and the component depth direction are orthogonal to each other. The component vertical direction, the component width direction, and the component depth direction in the disclosure may be different from a direction of a use state of the flow path switching valve.

In the following description of the drawings, the same reference numerals or similar reference numerals are assigned to the same portions and similar portions. However, a relationship between a thickness and a plane dimension in the drawings, a ratio of thicknesses of each device and each member, and the like are different from the actual ones. Therefore, specific thicknesses and dimensions should be determined in consideration of the following description. The drawings include portions having different dimensional relationships and ratios. Unless otherwise specified in the specification, the number of each component of the disclosure is not limited to one, and a plurality of components may be present.

First, a configuration of a flow path switching valve 10 assembled by a method of assembling the flow path switching valve will be described, and next, the method of assembling the flow path switching valve to assemble the flow path switching valve 10 will be described.

### <Configuration of Flow Path Switching Valve 10>

The flow path switching valve 10 is, for example, a rotary four-way valve that switches a flow path of liquid, which is an example of fluid flowing in an engine room of an automobile, in multiple directions.

As illustrated in Fig. 1, the flow path switching valve 10 includes a valve main body 20, a valve body 50, a sealing portion 70, a cover 80, a stem 84, and a drive unit 86. The valve body 50 may be referred to as a valve or a ball valve body.

### (Valve Main Body 20)

The valve main body 20 is integrally formed using a resin material. In the present embodiment, the valve main body 20 is formed using polyphenylene sulfide (PPS) as an example.

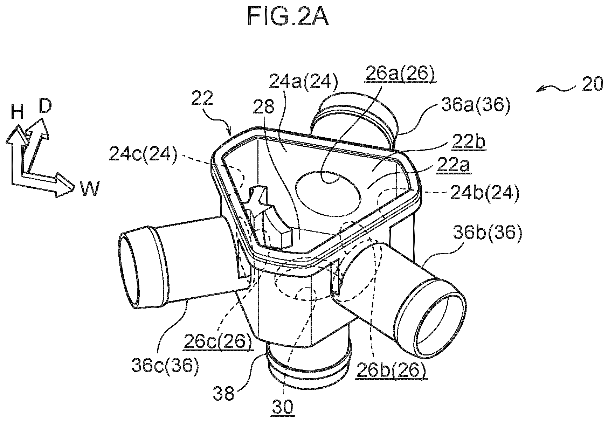

As illustrated in Fig. 2A, the valve main body 20 includes a box-shaped base portion 22 opened upward in the component vertical direction, three outflow pipes 36 protruding outward from the base portion 22, and one inflow pipe 38 protruding downward from the base portion 22.

### [Base Portion 22]

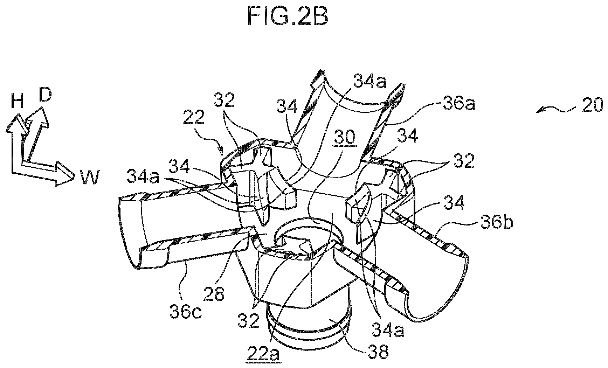

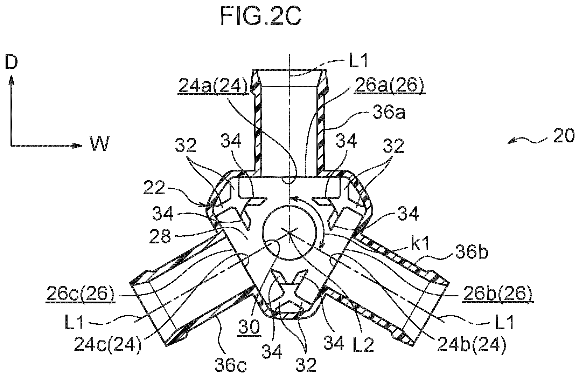

As illustrated in Figs. 2A, 2B, and 2C, the box-shaped base portion 22 has a triangular shape when viewed from above, and has three side walls 24 and a bottom portion 28. In the base portion 22, a valve chamber 22a in which the valve body 50 is disposed and an opening port 22b that opens the valve chamber 22a upward are formed. In this manner, a triangular prism-shaped valve chamber 22a with one end opened is formed inside the base portion 22. The side wall 24 may be referred to as a side plate.

A plate thickness direction of the bottom portion 28 is a component vertical direction, and three side walls 24 are orthogonal to the bottom portion 28. The bottom portion 28 may be referred to as a bottom plate.

### -Side Wall 24-

As illustrated in Figs. 2A, 2B, and 2C, three side walls 24 are provided. The three side walls 24 in the present embodiment correspond to three side walls in the disclosure. The plate thickness direction of one side wall 24 of the three side walls 24 is the component depth direction. Hereinafter, for convenience of description, the side wall 24 in which the plate thickness direction faces the component depth direction may be referred to as a side wall 24a, the side wall 24 positioned in the clockwise direction with respect to the side wall 24a in a plan view may be referred to as a side wall 24b, and the remaining side wall 24 may be referred to as a side wall 24c. In the present embodiment, the plan view is an arrow view as viewed from above in the component vertical direction.

In this regard, a circular flow path port 26 through which the liquid flowing out from the valve chamber 22a passes is formed in the side wall 24. Hereinafter, for convenience of description, the flow path port 26 formed in the side wall 24a may be referred to as a flow path port 26a, the flow path port 26 formed in the side wall 24b may be referred to as a flow path port 26b, and the flow path port 26 formed in the side wall 24c may be referred to as a flow path port 26c.

The three flow path ports 26a, 26b, and 26c are disposed in a planar shape. Here, being disposed in a planar shape means that center lines L1 of the three flow path ports 26a, 26b, and 26c are disposed in the same plane. The flow path port 26a of the present embodiment corresponds to a first flow path port of the disclosure. The flow path port 26b of the present embodiment corresponds to a second flow path port of the disclosure. The flow path port 26c of the present embodiment corresponds to a third flow path port of the disclosure.

As indicated by a bidirectional arrow kl in Fig. 2C, in a plan view, sandwiching angles of the center lines L1 of the adjacent flow path ports 26 are all the same, and are set to 120 [degrees]. In the disclosure, the similar angle means substantially the same angle.

### -Bottom Portion 28-

As illustrated in Figs. 2B and 2C, the bottom portion 28 has a triangular shape in a plan view, and a circular inflow port 30 through which liquid flowing into the valve chamber 22a passes is formed in the bottom portion 28. A center line L2 of the circular inflow port 30 extends in the component vertical direction, and overlaps an intersection of the three center lines L1 in a plan view as illustrated in Fig. 2C. Although described in detail later, the valve body 50 (see Fig. 1) rotates about the center line L2 as a rotation center (that is, an axial center).

A plurality of plate-shaped restricting portions 32 for positioning the sealing portion 70 (see Fig. 1) disposed in the valve chamber 22a is formed in the bottom portion 28.

As illustrated in Fig. 2C, a pair of the restricting portions 32 is formed between the flow path ports 26 in a plan view. Specifically, the restricting portion 32 protrudes from the bottom portion 28 and the side wall 24 to the valve chamber 22a and extends in the component vertical direction. The pair of restricting portions 32 sandwiches the sealing portion 70 to position the sealing portion 70.

As illustrated in Figs. 2B and 2C, a plurality of plate-shaped support portions 34 that support the valve body 50 (see Fig. 1) disposed in the valve chamber 22a from below is formed in the bottom portion 28. The plurality of support portions 34 are provided at apex portions of the triangular bottom portion 28. Specifically, the support portion 34 protrudes from the bottom portion 28 to the valve chamber 22a, and the support portion 34 is formed with a support surface 34a facing upward. The support surface 34a is a curved surface.

### [Outflow Pipe 36]

The outflow pipe 36 has a tubular shape, and as illustrated in Figs. 2A, 2B, and 2C, protrudes outward from the side wall 24 of the base portion 22 and extends in a direction orthogonal to the component vertical direction. Then, the liquid flowing out of the valve chamber 22a through the flow path port 26 passes through the outflow pipe 36.

Hereinafter, for convenience of description, the outflow pipe 36 protruding from the side wall 24a to the outside may be referred to as an outflow pipe 36a, the outflow pipe 36 protruding from the side wall 24b to the outside may be referred to as an outflow pipe 36b, and the outflow pipe 36 protruding from the side wall 24c to the outside may be referred to as an outflow pipe 36c.

### [Inflow Pipe 38]

The inflow pipe 38 has a tubular shape, and as illustrated in Figs. 2A and 2B, protrudes outward from the bottom portion 28 of the base portion 22 and extends downward in the component vertical direction. The fluid flowing through the inflow pipe 38 flows into the valve chamber 22a through the inflow port 30.

In the present embodiment, it is described that the fluid flows into the valve chamber 22a from the inflow pipe 38 (that is, the inflow port 30 of the inlet pipe 38) and flows out from the outflow pipe 36 (that is, outflow pipes 36a, 36b, 36c). However, the flow direction of the fluid is not limited thereto. For example, it is needless to say that the fluid flowing in from any one or more of the outflow pipes 36a, 36b, and 36c may be used to flow out from the other outflow pipes 36 or inflow pipe 38.

### (Valve Body 50)

The valve body 50 is integrally formed using a resin material. In the present embodiment, as an example, the valve body 50 is formed using polyphenylene sulfide (PPS). The valve body 50 may be referred to as a valve or a ball valve body.

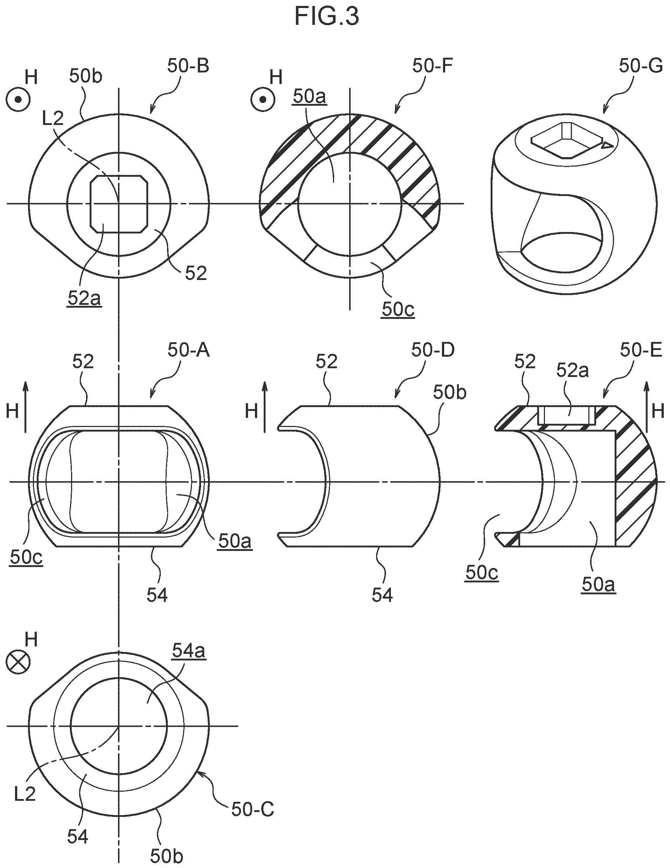

As illustrated in Fig. 3, the valve body 50 has a spherical shape, and a cavity 50a is formed therein. Fig. 3 illustrates the valve body 50 viewed from each direction. Hereinafter, the valve body 50 viewed from the front side orthogonal to the component vertical direction is referred to as a valve body 50-A, the valve body 50 viewed from above in the component vertical direction is referred to as a valve body 50-B, and the valve body 50 viewed from below in the component vertical direction is referred to as a valve body 50-C. The valve body 50 viewed from a side surface side orthogonal to the component vertical direction is referred to as a valve body 50-D, a cross section of the valve body 50 viewed from the side surface side is referred to as a valve body 50-E, and a cross section of the valve body 50 viewed from above is referred to as a valve body 50-F. A perspective view of the valve body 50 is referred to as a valve body 50-G.

As illustrated in the valve body 50-A, the valve body 50-B, and the valve body 50-C, a planar upper surface portion 52 facing upward is formed in an upper portion of the valve body 50, and a planar lower surface portion 54 facing downward is formed in a lower portion of the valve body 50. The lower surface portion 54 is an example of a flat portion. The lower surface portion 54 (that is, the flat portion) is not necessarily required to have a planar shape, and for example, may have any shape as long as the protruding portion is not formed when the valve body 50 is viewed from the side.

The upper surface portion 52 and the lower surface portion 54 are circular, and the lower surface portion 54 is larger than the upper surface portion 52. An outer surface 50b of the valve body 50 sandwiched between the upper surface portion 52 and the lower surface portion 54 is spherical. The support surface 34a (see Fig. 2B) of the support portion 34 described above is a curved surface along the outer surface of the valve body 50. All the spherical portions of the outer surface 50b of the valve body 50 need not have a spherical surface, and a portion sliding on another member may be spherical (that is, the spherical surface).

A recessed portion 52a having a rectangular shape when viewed from above is formed in the upper surface portion 52. In the lower surface portion 54, a circular inflow hole 54a communicating with the cavity 50a and centered on the center line L2 (see Fig. 2C) is formed. Specifically, in the use state of the flow path switching valve 10, the inflow hole 54a has a circular shape centered on the center line L2. The inflow hole 54a faces the inflow port 30 (see Fig. 2B) of the valve main body 20 in the component vertical direction in the use state of the flow path switching valve 10. In other words, the lower surface portion 54 where the inflow hole 54a is formed faces the bottom portion 28 where the inflow port 30 of the valve main body 20 is formed in the component vertical direction in the use state of the flow path switching valve 10.

As illustrated in the valve body 50-A, the valve body 50-D, the valve body 50-E, and the valve body 50-F, a flow hole 50c through which liquid flowing into the cavity 50a or flowing out from the cavity 50a passes is formed in the outer surface 50b of the valve body 50. As illustrated in the valve body 50-F, the flow hole 50c extends in the circumferential direction of the valve body 50 when viewed from above.

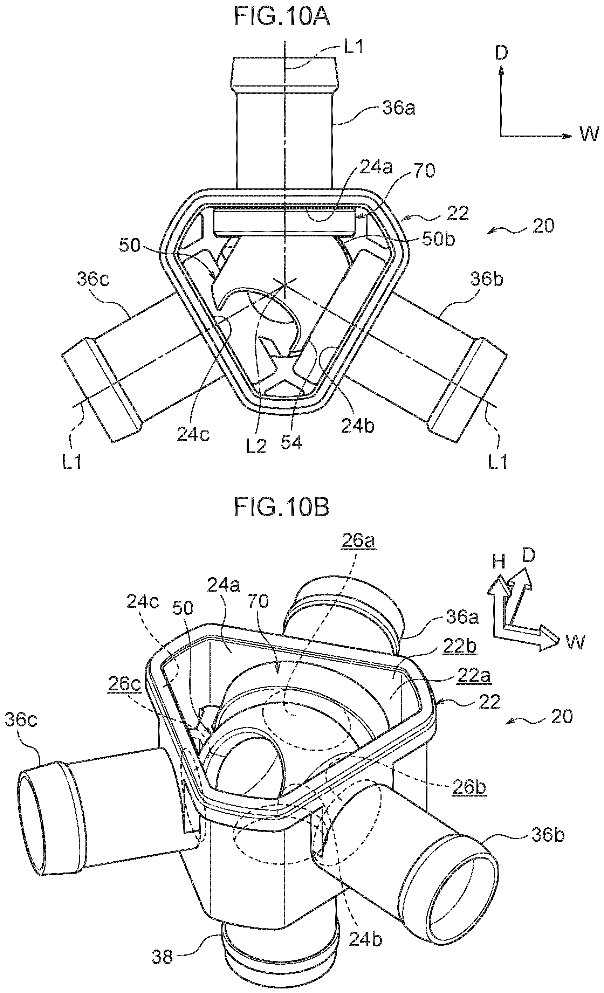

In this configuration, the valve body 50 supported by the support portion 34 rotates about the center line L2 in the use state of the flow path switching valve 10. That is, the valve body 50 is rotatably disposed in the valve chamber 22a. When the valve body 50 is rotated to cause the lower surface portion 54 of the valve body 50 and the side wall 24 of the base portion 22 to face each other, a gap into which the sealing portion 70 can be inserted is formed between the lower surface portion 54 and the side wall 24 (see Fig. 10A).

### (Sealing Portion 70)

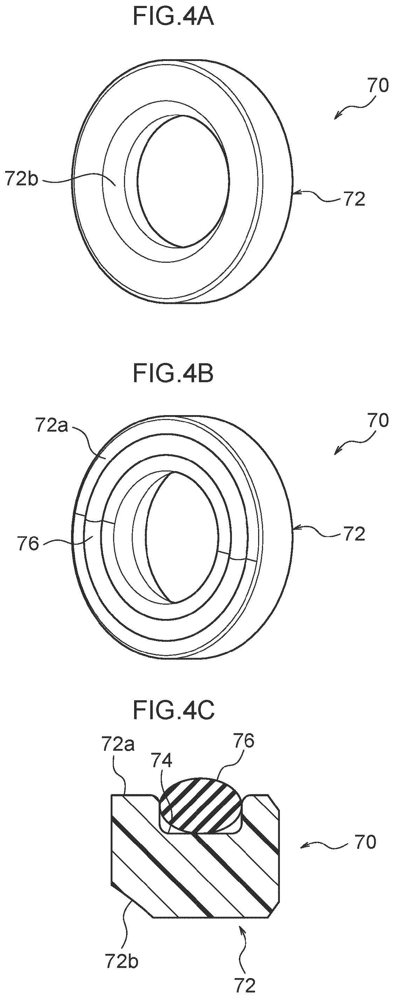

As illustrated in Fig. 1, three sealing portions 70 each having an annular shape are provided. As illustrated in Figs. 4A, 4B, and 4C, the sealing portion 70 includes a seat 72 and an O-ring 76.

### -Seat 72-

The seat 72 is integrally formed using a resin material. In the present embodiment, the seat 72 is formed using polytetrafluoroethylene (PTFE), for example.

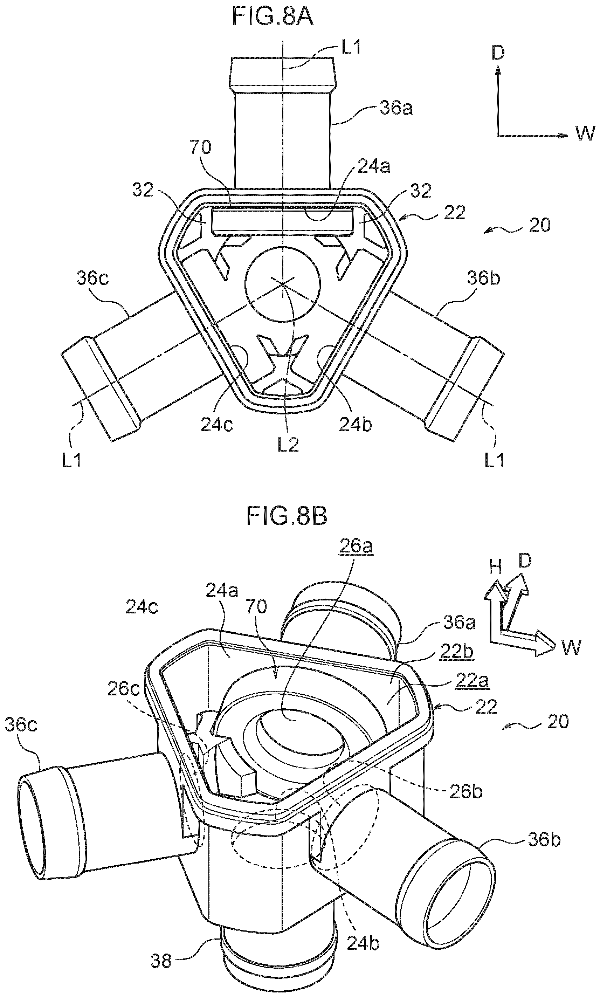

As illustrated in Figs. 4A and 4B, the seat 72 has an annular shape, and surrounds the flow path port 26 in a state of being disposed in the valve chamber 22a (see Figs. 8A and 8B).

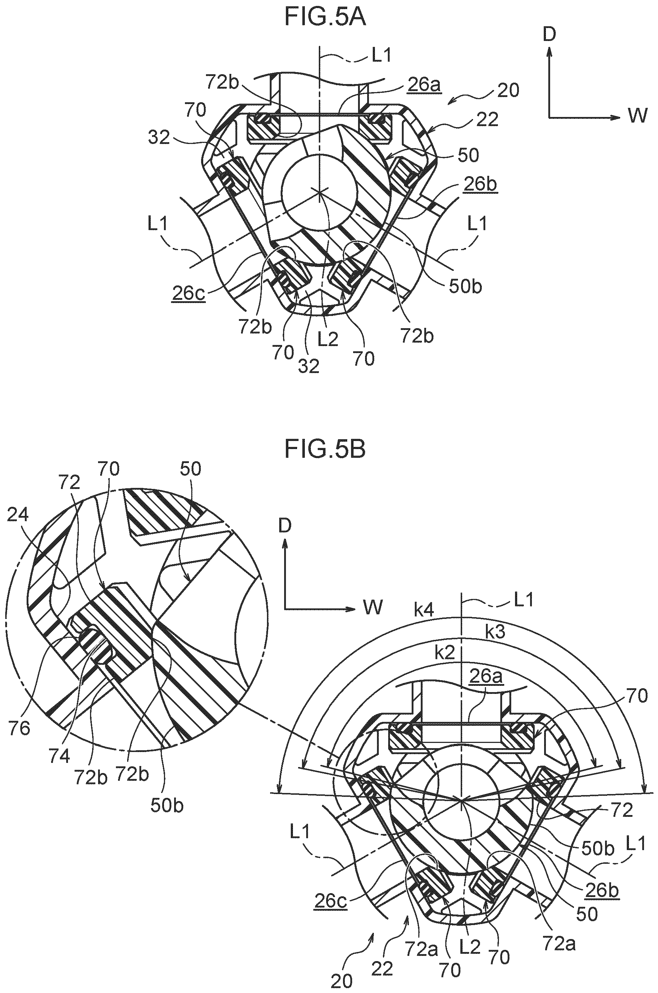

As illustrated in Figs. 4C and 5B, the seat 72 is formed with a facing surface 72a facing the side wall 24 of the base portion 22, and a tapered surface 72b inclined with respect to the center line L1 of the flow path port 26 on a side opposite to the facing surface 72a. An annular recessed portion 74 is formed in the facing surface 72a.

### -O-ring 76-

The O-ring 76 is formed using an elastic member. In the present embodiment, the O-ring 76 is formed using ethylene propylene diene rubber (EPDM), for example.

As illustrated in Figs. 4B, 4C, and 5B, a part of the O-ring 76 is inserted into the recessed portion 74 of the seat 72. The O-ring 76 comes into contact with the side wall 24 of the valve main body 20 and is elastically deformed in a state in which the seat 72 is disposed in the valve chamber 22a.

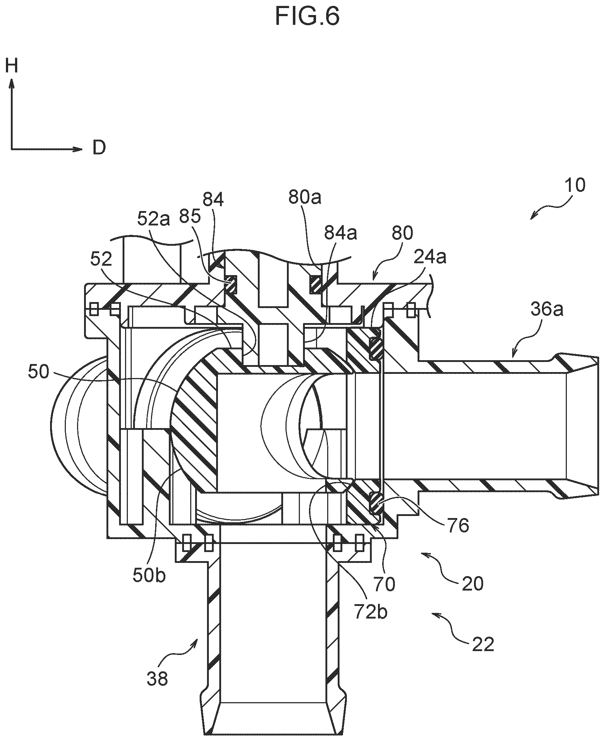

In this configuration, as illustrated in Figs. 5A, 5B, and 6, at least a part of the outer surface 50b of the valve body 50 is in contact with the tapered surfaces 72b of the three seats 72 regardless of the position of the valve body 50 that rotates about the center line L2. When the tapered surface 72b of the seat 72 comes into contact with the outer surface 50b of the valve body 50, the seat 72 is pushed toward the side wall 24 side, and as a result, the O-ring 76 is compressed. As the O-ring 76 is compressed, a contact pressure between the outer surface 50b of the valve body 50 and the tapered surface 72b of the seat 72 increases.

As a result, the flow of liquid between the seat 72 and the side wall 24 is inhibited. The flow of liquid between the tapered surface 72b and the outer surface 50b of the valve body 50 is inhibited. In other words, the sealing portion 70 comes into contact with the outer surface 50b to seal between the outer surface 50b and the side wall 24.

As illustrated in Fig. 5A, the outer surface 50b of the rotating valve body 50 covers the entire flow path port 26b. In other words, the outer surface 50b of the valve body 50 comes into contact with the entire circumference of the tapered surface 72b of the seat 72 in the sealing portion 70 disposed so as to surround the flow path port 26b.

As a result, the liquid flowing into the valve chamber 22a from the inflow port 30 cannot flow out from the flow path port 26b. In other words, the flow path port 26b is closed. In this manner, the outer surface 50b of the rotating valve body 50 is moved to and disposed at a position in contact with the entire circumference of any one of the sealing portions 70.

As illustrated in Fig. 5B, the outer surface 50b of the rotating valve body 50 covers the entire flow path port 26b and the entire flow path port 26c. In other words, the outer surface 50b of the valve body 50 comes into contact with the entire circumference of the tapered surface 72b of the seat 72 in the sealing portion 70 disposed so as to surround the flow path port 26b and the entire circumference of the tapered surface 72b of the seat 72 in the sealing portion 70 disposed so as to surround the flow path port 26c.

As a result, the liquid flowing into the valve chamber 22a from the inflow port 30 cannot flow out from the flow path port 26b and the flow path port 26c. In other words, the flow path port 26b and the flow path port 26c are closed. In this manner, the outer surface 50b of the rotating valve body 50 is moved and disposed at a position in contact with the entire circumference of any two sealing portions 70.

In the present embodiment, as an example, a central angle (that is, central angle k2 illustrated in Fig. 5) from one edge to the other edge of the outer surface 50b of the valve body 50 is 149 [degrees]. A central angle (that is, central angle k3 illustrated in Fig. 5) from a point on one end of one tapered surface 72b of the seat 72 to a point on one end of the other tapered surface 72b is 155 [degrees]. A central angle (that is, central angle k4 illustrated in Fig. 5) from the point at the other end of one tapered surface 72b of seat 72 to the point at the other end of the other tapered surface 72b is 176 [degrees].

### (Cover 80, Stem 84)

The cover 80 is integrally formed using a resin material. In the embodiment, cover 80 is formed by using polyphenylene sulfide (PPS), for example. As illustrated in Fig. 1, the cover 80 has a plate shape with the component vertical direction as a plate thickness direction, and closes the opening port 22b of the valve chamber 22a of the valve main body 20 from above.

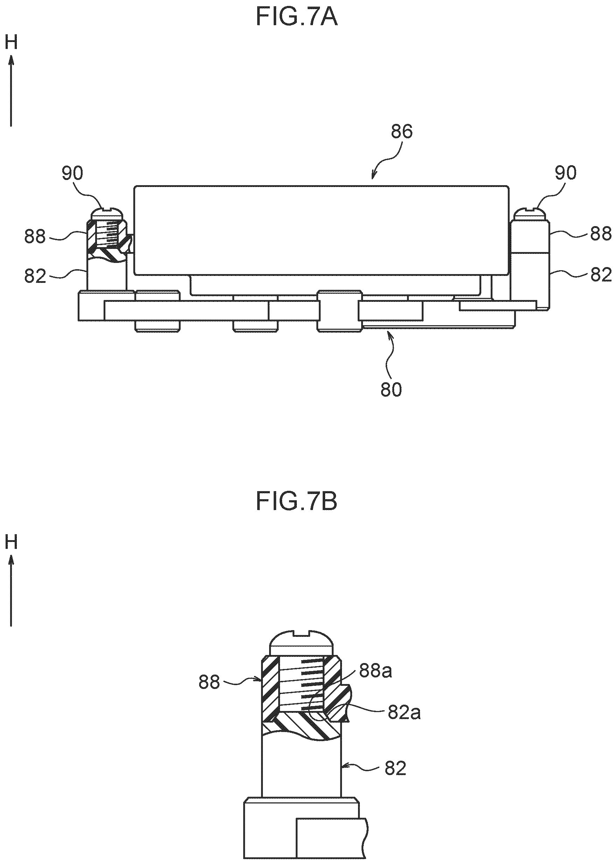

The cover 80 has a through hole 80a through which the stem 84 passes, and three cylindrical portions 82 for attaching the drive unit 86 to the cover 80. A screw portion of a screw 90 used for attaching the drive unit 86 to the cover 80 meshes with an inner peripheral surface of the cylindrical portion 82. As illustrated in Figs. 7A and 7B, the upper surface 82a of the cylindrical portion 82 has a protruding conical shape.

In this configuration, the cover 80 closes the opening port 22b of the valve main body 20 and is fused to the valve main body 20. As a result, the valve chamber 22a is closed.

As illustrated in Fig. 1, the stem 84 extends in the component vertical direction and passes through a through hole 80a formed in the cover 80 (see Fig. 6). In a portion of the stem 84 disposed in the valve chamber 22a, a fitting portion 84a to be fitted into a recessed portion 52a formed in the upper surface portion 52 of the valve body 50 is formed. In this regard, in the stem 84, a gear portion 84b to which the driving force of the motor included in the drive unit 86 is transmitted is formed in a portion opposite to the fitting portion 84a.

An O-ring 85 that seals between the stem 84 and the through hole 80a of the cover 80 is attached to the stem.

### (Drive Unit 86)

The drive unit 86 is provided with a motor inside the drive unit 86. As illustrated in Fig. 1, the drive unit 86 is attached to the cover 80 from above the cover 80. The drive unit 86 is formed with three cylindrical portions 88 for attaching the drive unit 86 to the cover 80. The screw 90 used for attaching the drive unit 86 to the cover 80 is inserted into a circular hole formed in the cylindrical portion 88. As illustrated in Figs. 7A and 7B, a lower surface 88a of the cylindrical portion 88 has a recessed conical shape so that an upper surface 82a of the cylindrical portion 82 is fitted.

In this configuration, the three screws 90 are passed through the cylindrical portion 88, and the screw portions of the screws 90 are respectively tightened into the cylindrical portions 82. Thus, the drive unit 86 is attached to the cover 80. In this state, the gear portion 84b (see Fig. 1) of the stem 84 meshes with the output shaft of the drive unit 86.

### <Method of Assembling Flow Path Switching Valve 10>

Next, a method of assembling the flow path switching valve 10 will be described. First, as illustrated in Figs. 8A and 8B, the valve main body 20 is placed on a jig so that the opening port 22b of the valve main body 20 faces upward. In this state, the sealing portion 70 is disposed in the valve chamber 22a through the opening port 22b. Specifically, the sealing portion 70 is positioned by the restricting portion 32 and is disposed so as to surround the flow path port 26a.

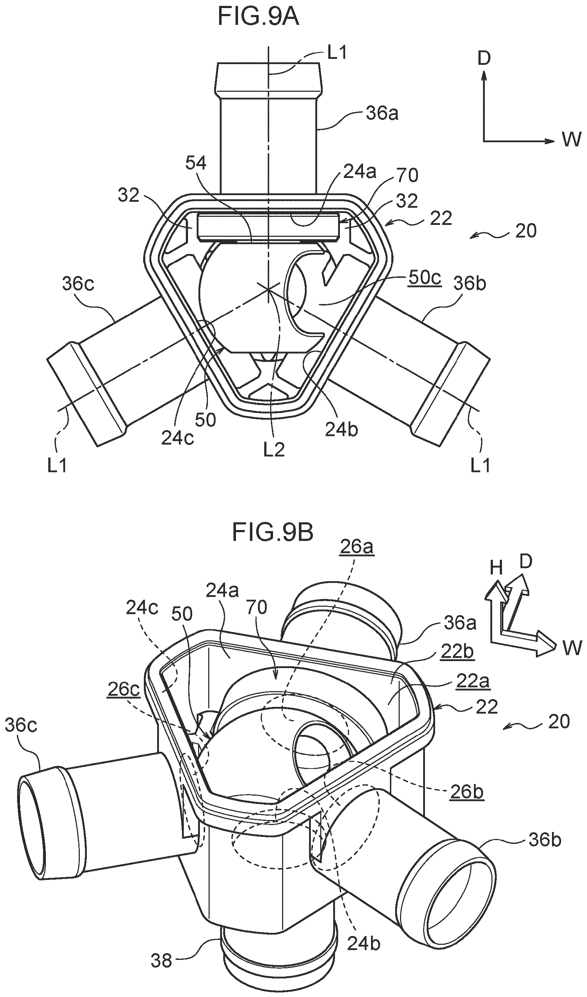

Next, as illustrated in Figs. 9A and 9B, the valve body 50 is disposed in the valve chamber 22a through the opening port 22b. Specifically, the valve body 50 is supported by the support portion 34 (see Fig. 2B), and is disposed so that the lower surface portion 54 of the valve body 50 faces the side wall 24a. That is, the valve body 50 is disposed in a state of being inclined by 90 [degrees] with respect to the position of the valve body 50 in the use state of the flow path switching valve 10. In this state, the flow hole 50c of the valve body 50 faces one side (that is, the right side illustrated in Fig. 9A) in the component width direction.

Next, as illustrated in Figs. 10A and 10B, the valve body 50 is rotated about the center line L2. Specifically, the valve body 50 is rotated so that the lower surface portion 54 of the valve body 50 faces the side wall 24b. As a result, a gap into which the sealing portion 70 is inserted is formed between the lower surface portion 54 of the valve body 50 and the side wall 24b. In this regard, when the valve body 50 is rotated, the outer surface 50b of the valve body 50 comes into contact with the tapered surface 72b (see Fig. 5B) of the seat 72 in the sealing portion 70 disposed so as to surround the flow path port 26a.

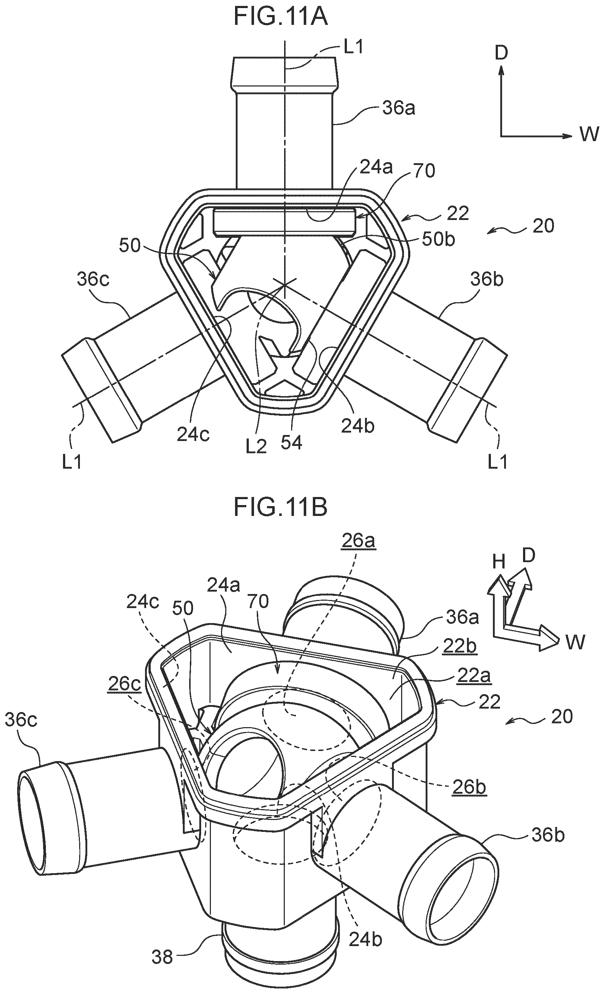

Next, as illustrated in Figs. 11A and 11B, the sealing portion 70 is disposed in the valve chamber 22a through the opening port 22b. Specifically, the sealing portion 70 is positioned by the restricting portion 32 and is disposed so as to surround the flow path port 26b.

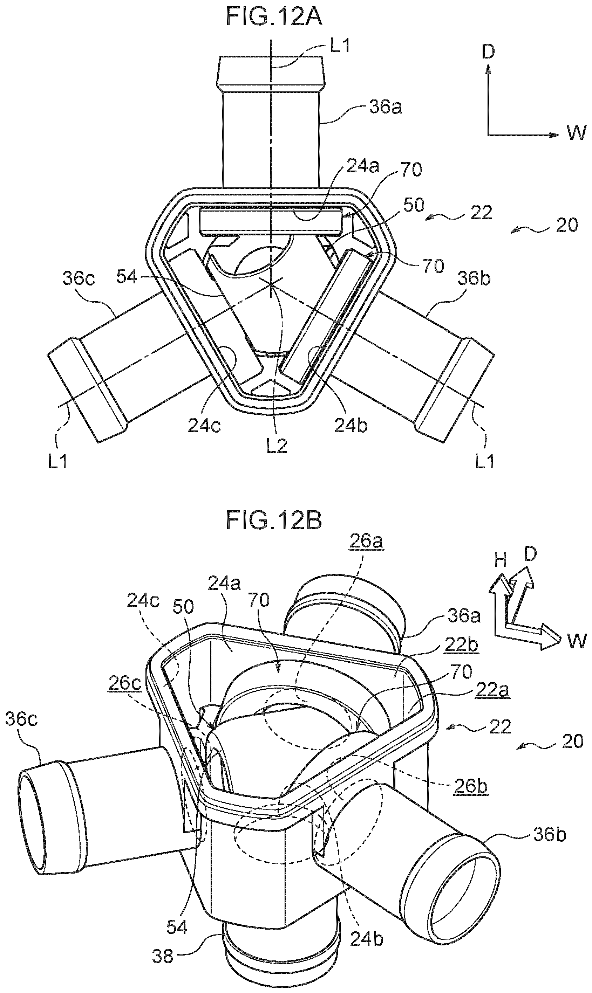

Next, as illustrated in Figs. 12A and 12B, the valve body 50 is rotated about the center line L2. Specifically, the valve body 50 is rotated so that the lower surface portion 54 of the valve body 50 faces the side wall 24c. As a result, the gap into which the sealing portion 70 is inserted is formed between the lower surface portion 54 of the valve body 50 and the side wall 24c. In this regard, when the valve body 50 is rotated, the outer surface 50b of the valve body 50 comes into contact with the tapered surface 72b (see Fig. 5B) of the seat 72 in the sealing portion 70 disposed so as to surround the flow path port 26b.

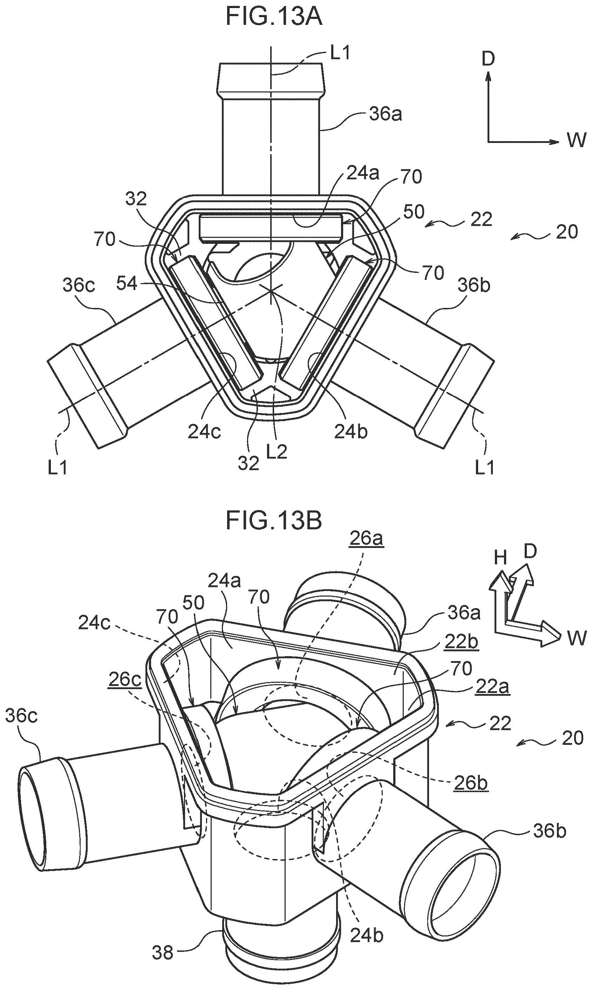

Next, as illustrated in Figs. 13A and 13B, the sealing portion 70 is disposed in the valve chamber 22a through the opening port 22b. Specifically, the sealing portion 70 is positioned by the restricting portion 32 and is disposed so as to surround the flow path port 26c.

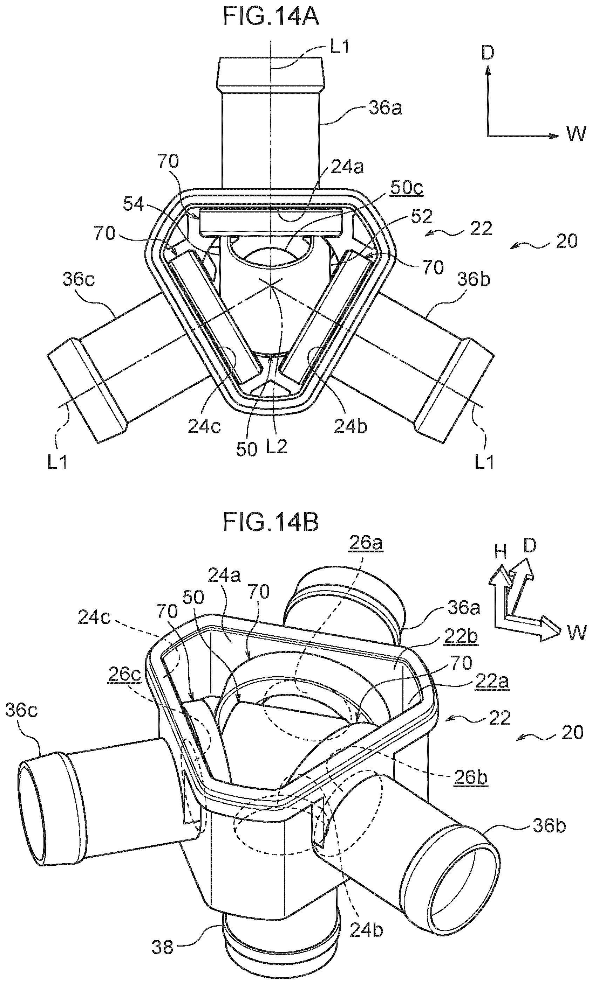

Next, as illustrated in Figs. 14A and 14B, the valve body 50 is rotated about the center line L2. Specifically, the valve body 50 is rotated so that the flow hole 50c of the valve body 50 faces the flow path port 26a.

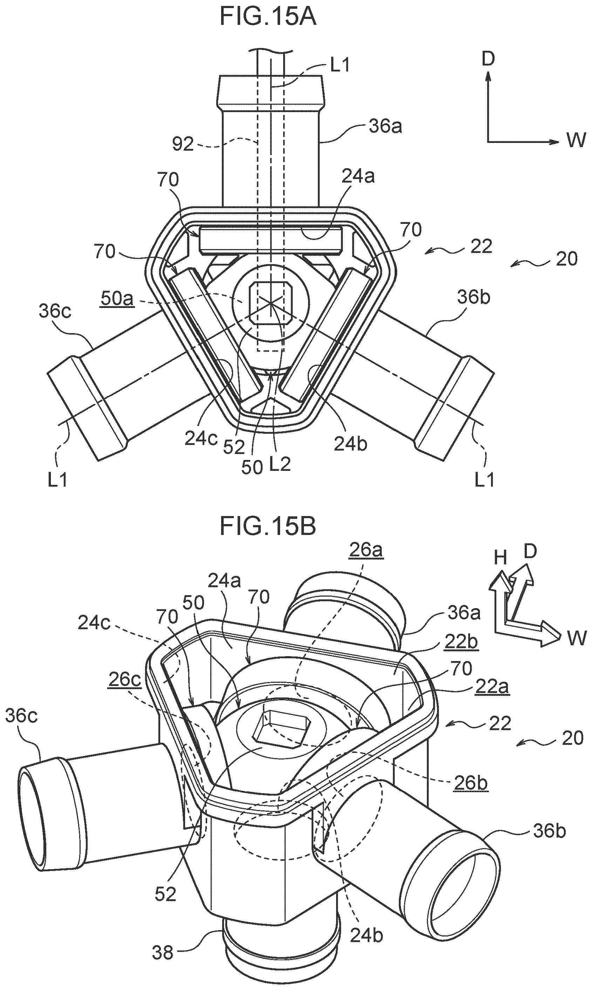

Next, as illustrated in Figs. 15A and 15B, the valve body 50 is rotated. Specifically, the rod-shaped jig 92 is inserted into the cavity 50a of the valve body 50 through the outflow pipe 36a and the flow path port 26a. Then, the distal end of the jig 92 is inserted into a recessed portion (not illustrated) formed in a wall surface constituting the cavity 50a. The distal end of the jig 92 is engaged with the valve body 50.

By rotating the jig 92 in this state, the valve body 50 is rotated so that the upper surface portion 52 of the valve body 50 faces upward. Accordingly, the valve body 50 is disposed at the position of the flow path switching valve 10 in the use state.

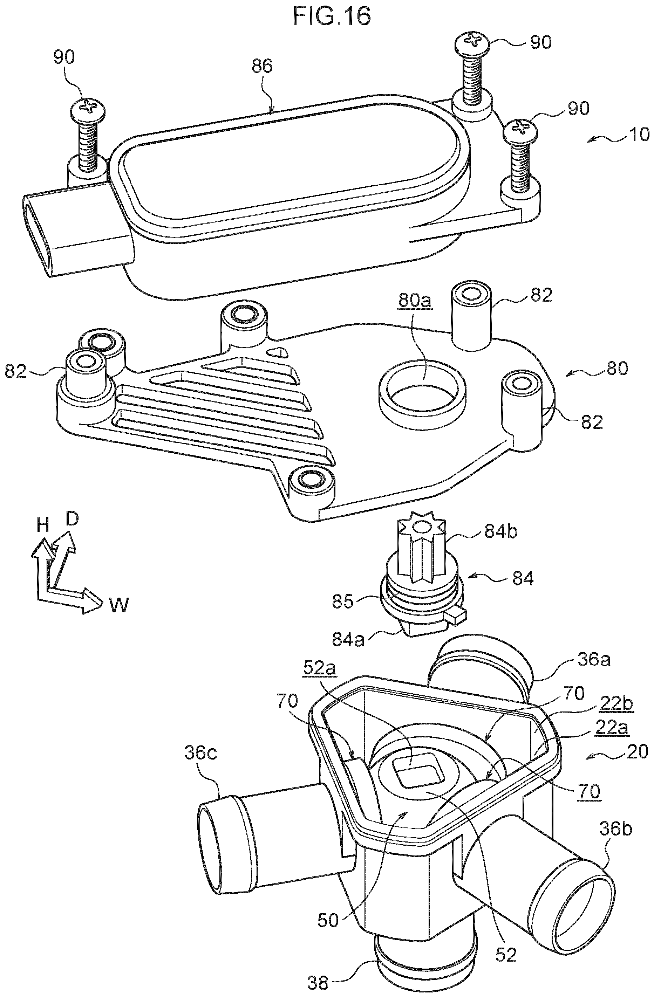

Next, as illustrated in Fig. 16, the fitting portion 84a of the stem 84 is fitted into the recessed portion 52a of the upper surface portion 52 of the valve body 50. The stem 84 is inserted into the through hole 80a of the cover 80. Then, the cover 80 closes the opening port 22b of the valve main body 20 and is fused to the valve main body 20. As a result, the valve chamber 22a is closed.

The drive unit 86 is attached to the cover 80. Specifically, as illustrated in Figs. 7A and 7B, three screws 90 are passed through the cylindrical portion 88, and the screws 90 are each tightened into the cylindrical portion 82. Thus, the drive unit 86 is attached to the cover 80. In this state, the gear portion 84b of the stem 84 meshes with the output shaft of the drive unit 86.

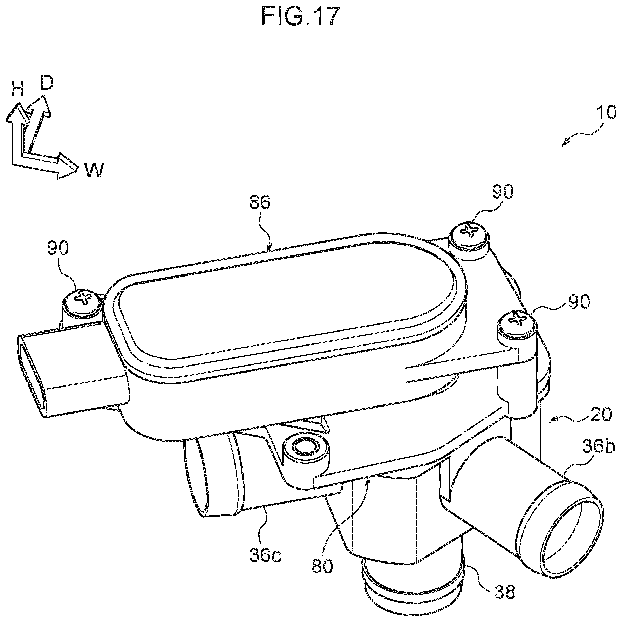

As a result, as illustrated in Fig. 17, the flow path switching valve 10 is assembled.

### <Operation of Flow Path Switching Valve 10>

Next, the operation of the flow path switching valve 10 will be described. By using the flow path switching valve 10, an outflow destination of the liquid flowing into the valve chamber 22a from the inflow port 30 of the valve main body 20 is switched. Specifically, the drive unit 86 rotates the valve body 50 disposed in the valve chamber 22a about the center line L2 via the stem 84. As a result, the flow path port 26 through which the liquid flowing into the valve chamber 22a from the inflow port 30 flows out is switched.

For example, as illustrated in Fig. 5A, the outer surface 50b of the rotating valve body 50 covers the entire flow path port 26b. In other words, the outer surface 50b of the valve body 50 comes into contact with the entire circumference of the tapered surface 72b of the seat 72 in the sealing portion 70 disposed so as to surround the flow path port 26b. In other words, the outer surface 50b of the valve body 50 comes into contact with the entire circumference (that is, the entire circumference of the tapered surface 72b of the sealing portion 70) of the sealing portion 70 disposed so as to surround the flow path port 26b.

As a result, the liquid flowing into the valve chamber 22a from the inflow port 30 cannot flow out from the flow path port 26b. In other words, the flow path port 26b is closed.

In this state, the outer surface 50b of the valve body 50 is not in contact with the entire circumference of the sealing portion 70 disposed so as to surround the flow path port 26a and the entire circumference of the sealing portion 70 disposed so as to surround the flow path port 26c. Therefore, the liquid flowing into the valve chamber 22a from the inflow port 30 flows out from the flow path port 26a and the flow path port 26c.

The drive unit 86 rotates the valve body 50 disposed in the valve chamber 22a around the center line L2 via the stem 84, so that the outer surface 50b of the valve body 50 covers the entire flow path port 26a. As a result, the outer surface 50b of the valve body 50 comes into contact with the entire circumference of the sealing portion 70 disposed so as to surround the flow path port 26a. The flow path port 26a is closed by the outer surface 50b.

In this state, the outer surface 50b of the valve body 50 is not in contact with the entire circumference of the sealing portion 70 disposed so as to surround the flow path port 26b and the entire circumference of the sealing portion 70 disposed so as to surround the flow path port 26c. Therefore, the liquid flowing into the valve chamber 22a from the inflow port 30 flows out from the flow path port 26b and the flow path port 26c.

The drive unit 86 rotates the valve body 50 disposed in the valve chamber 22a around the center line L2 via the stem 84, so that the outer surface 50b of the valve body 50 covers the entire flow path port 26c. As a result, the outer surface 50b of the valve body 50 comes into contact with the entire circumference of the sealing portion 70 disposed so as to surround the flow path port 26c. The flow path port 26c is closed by the outer surface 50b.

In this state, the outer surface 50b of the valve body 50 is not in contact with the entire circumference of the sealing portion 70 disposed so as to surround the flow path port 26a and the entire circumference of the sealing portion 70 disposed so as to surround the flow path port 26b. Therefore, the liquid flowing into the valve chamber 22a from the inflow port 30 flows out from the flow path port 26a and the flow path port 26b.

As described above, the outer surface 50b of the rotating valve body 50 is disposed to move to a position in contact with the entire circumference of any one sealing portion 70.

In this regard, when the drive unit 86 rotates the valve body 50 disposed in the valve chamber 22a around the center line L2 via the stem 84, the outer surface 50b of the valve body 50 covers the entire flow path port 26b and the entire flow path port 26c as illustrated in Fig. 5B. In other words, the outer surface 50b of the valve body 50 comes into contact with the entire circumference of the tapered surface 72b of the seat 72 in the sealing portion 70 disposed so as to surround the flow path port 26b and the entire circumference of the tapered surface 72b of the seat 72 in the sealing portion 70 disposed so as to surround the flow path port 26c.

As a result, the liquid flowing into the valve chamber 22a from the inflow port 30 cannot flow out from the flow path port 26b and the flow path port 26c. In other words, the flow path port 26b and the flow path port 26c are closed.

In this state, the outer surface 50b of the valve body 50 is not in contact with the sealing portion 70 disposed so as to surround the flow path port 26a. Therefore, the liquid flowing into the valve chamber 22a from the inflow port 30 flows out from the flow path port 26a.

The drive unit 86 rotates the valve body 50 disposed in the valve chamber 22a around the center line L2 via the stem 84, and thus, the outer surface 50b of the valve body 50 covers the entire flow path port 26a and the entire flow path port 26c. As a result, the outer surface 50b of the valve body 50 comes into contact with the entire circumference of the sealing portion 70 disposed so as to surround the flow path port 26a and the entire circumference of the sealing portion 70 disposed so as to surround the flow path port 26c. The flow path port 26a and the flow path port 26c are closed by the outer surface 50b.

In this state, the outer surface 50b of the valve body 50 is not in contact with the sealing portion 70 disposed so as to surround the flow path port 26b. Therefore, the liquid flowing into the valve chamber 22a from the inflow port 30 flows out from the flow path port 26b.

The drive unit 86 rotates the valve body 50 disposed in the valve chamber 22a around the center line L2 via the stem 84, and thus, the outer surface 50b of the valve body 50 covers the entire flow path port 26a and the entire flow path port 26b. As a result, the outer surface 50b of the valve body 50 comes into contact with the entire circumference of the sealing portion 70 disposed so as to surround the flow path port 26a and the entire circumference of the sealing portion 70 disposed so as to surround the flow path port 26b. The flow path port 26a and the flow path port 26b are closed by the outer surface 50b.

In this state, the outer surface 50b of the valve body 50 is not in contact with the sealing portion 70 disposed so as to surround the flow path port 26c. Therefore, the liquid flowing into the valve chamber 22a from the inflow port 30 flows out from the flow path port 26c.

As described above, the outer surface 50b of the rotating valve body 50 is disposed to move to a position in contact with the entire circumference of any two sealing portions 70.

### <Summary>

In the method of assembling the flow path switching valve 10 described above, when the valve body 50 is inclined by 90 [degrees] with respect to the use state and the lower surface portion 54 of the valve body 50 is made to face the side wall 24 of the valve main body 20, the gap into which the sealing portion 70 can be inserted is formed between the side wall 24 and the lower surface portion 54. Accordingly, the sealing portion 70 is inserted into this gap. Then, by sequentially causing the valve body 50 to face the other side wall 24, all the sealing portions 70 are disposed in the valve chamber 22a. The valve body 50 is disposed in the use state by rotating the valve body 50 in a state in which the valve body 50 and the three sealing portions 70 are disposed in the valve chamber 22a.

As described above, according to the method of assembling the flow path switching valve 10 of the disclosure, the valve body 50 and the sealing portion 70 can be easily disposed in the valve chamber 22a of the valve main body 20 in which the side wall 24 in which the flow path port 26 is formed is not divided.

In the method of assembling the flow path switching valve 10, in the step of disposing the valve body 50 at the position in the used state, the rod-shaped jig 92 is inserted into the cavity 50a of the valve body 50 through the outflow pipe 36a and the flow path port 26a. Then, the distal end of the jig 92 is inserted into a recessed portion (not illustrated) formed in the wall surface of the cavity 50a, and the jig 92 is rotated. As a result, the valve body 50 is disposed at the position of the use state (see Fig. 15).

As described above, according to the method of assembling the flow path switching valve 10 of the disclosure, the valve body 50 can be easily rotated even in a state in which the valve body 50 and the three sealing portions 70 are disposed in the valve chamber 22a by using the rod-shaped jig 92.

In the method of assembling the flow path switching valve 10, after the step of disposing the sealing portion 70 so as to surround the flow path port 26a, the valve body 50 is disposed so that the side wall 24a on which the flow path port 26a is formed and the lower surface portion 54 of the valve body 50 face each other.

As a result, the valve body 50 can be disposed without being conscious of forming the gap into which the sealing portion 70 is inserted between the side wall 24a in which the flow path port 26a is formed and the lower surface portion 54, that is, without causing a burden in the step of forming the gap.

Although the disclosure has been described in detail with respect to specific embodiments, the disclosure is not limited to such embodiments, and it is apparent to those skilled in the art that the disclosure can adopt various other embodiments within the scope of the disclosure. For example, although not specifically described in the above embodiment, the flow path switching valve 10 includes the inflow pipe 38 and the inflow port 30. However, in the disclosure, the flow path switching valve need not include the inflow pipe and the inflow port. That is, the flow path switching valve may be a rotary three-way valve. In this case, liquid flows in from one flow path port 26, and liquid flows out from the other flow path port 26.

In the above embodiment, the order in which the valve body 50 is disposed so that the side wall 24a on which the flow path port 26a is formed and the lower surface portion 54 of the valve body 50 face each other after the step of disposing the sealing portion 70 so as to surround the flow path port 26a has been exemplified. However, in the disclosure, the respective steps may be performed in the reverse order. In this case, the action exerted by disposing the valve body 50 after the step of disposing the sealing portion 70 does not occur.

In the above embodiment, the description has been made using the liquid as the fluid, but in the disclosure, the fluid may be a gas.

The entire disclosure of Japanese Patent Application No. 2022-007408 filed on January 20, 2022 is incorporated herein by reference.

All documents, patent applications, and technical standards described in this specification are incorporated herein by reference to the same extent as if each document, patent application, and technical standard were specifically and individually described to be incorporated by reference.

## Claims

1. A method of assembling a flow path switching valve including a valve main body, a valve chamber having one end opened being formed inside the valve main body, and a flow path port through which a fluid passes being formed in each of three side walls of the valve chamber, a valve body that is rotatably disposed in the valve chamber, that has a cavity formed inside the valve body, that has a spherical outer surface, that has a flat portion formed in a portion facing a bottom portion of the valve chamber, and that has a flow hole through which a fluid flowing into the cavity or flowing out from the cavity passes and which is formed in the outer surface, three sealing portions that each have an annular shape, that are each disposed so as to surround the flow path port, and that each come into contact with the outer surface to seal between the outer surface and a side wall, a cover that closes an opening port of the valve chamber, and a gap formed between the flat portion of the valve body and the side wall of the valve main body so that the sealing portion is inserted in a state in which the flat portion faces the side wall, the method comprising:
a step of disposing a first sealing portion so as to surround a first flow path port through the opening port;
a step of disposing the valve body so that the side wall on which the first flow path port is formed and the flat portion face each other through the opening port;
a step of rotating the valve body so that the flat portion and the side wall on which a second flow path port is formed face each other;
a step of disposing a second sealing portion so as to surround the second flow path port through the opening port;
a step of rotating the valve body so that the flat portion and the side wall on which a third flow path port is formed face each other;
a step of disposing a third sealing portion so as to surround the third flow path port through the opening port;
a step of rotating the valve body so that the flat portion and the bottom portion face each other; and
a step of closing the opening port by using the cover.

2. A method of assembling a flow path switching valve including a valve main body, a valve chamber having one end opened being formed inside the valve main body, an inflow port through which a fluid passes being formed in a bottom portion of the valve chamber, and a flow path port through which the fluid passes being formed in each of three side walls of the valve chamber, a valve body that is rotatably disposed in the valve chamber, that has a cavity formed inside the valve body, that has a spherical outer surface, that has a flat portion formed in a portion facing the bottom portion, and that has a flow hole through which a fluid flowing into the cavity or flowing out from the cavity passes and which is formed in the outer surface, three sealing portions that each have an annular shape, that are each disposed so as to surround the flow path port, and that each come into contact with the outer surface to seal between the outer surface and a side wall, a cover that closes an opening port of the valve chamber, and a gap formed between the flat portion of the valve body and the side wall of the valve main body so that the sealing portion is inserted in a state in which the flat portion faces the side wall, the method comprising:
a step of disposing a first sealing portion so as to surround a first flow path port through the opening port;
a step of disposing the valve body so that the side wall on which the first flow path port is formed and the flat portion face each other through the opening port;
a step of rotating the valve body so that the flat portion and the side wall on which a second flow path port is formed face each other;
a step of disposing a second sealing portion so as to surround the second flow path port through the opening port;
a step of rotating the valve body so that the flat portion and the side wall on which a third flow path port is formed face each other;
a step of disposing a third sealing portion so as to surround the third flow path port through the opening port;
a step of rotating the valve body so that the flat portion and the bottom portion face each other; and
a step of closing the opening port by using the cover.

3. The method of assembling a flow path switching valve according to claim 1 or 2, wherein:
a step of rotating the valve body to cause the flow hole of the valve body and any one of the flow path ports to face each other is provided between the step of disposing the third sealing portion so as to surround the third flow path port through the opening port and the step of rotating the valve body so that the flat portion and the bottom portion face each other, and
in the step of rotating the valve body so that the flat portion and the bottom portion face each other, a rod-shaped jig is inserted into the valve chamber from the flow path port, a distal end of the jig engages with the valve body through the flow path port, and the valve body is rotated by rotating the jig.

4. The method of assembling a flow path switching valve according to any one of claims 1 to 3, wherein, after the step of disposing the first sealing portion so as to surround the first flow path port, the step of disposing the valve body so that the side wall on which the first flow path port is formed and the flat portion face each other is performed.
